# NEUE EUROPÄISCHE PATENTSCHRIFT

(11) **EP 1 959 129 B2**
(45) Veröffentlichungstag und Bekanntmachung des Hinweises auf die Entscheidung über den Einspruch: **17.05.2017**
(45) Hinweis auf die Patenterteilung: 30.11.2011
(21) Anmeldenummer: 07021392.1
(22) Anmeldetag: 02.11.2007
(51) Int. Cl.: F03D 1/06, F03D 7/02

(54) **Windenergieanlage**
Wind turbine
Eolienne

(30) Priorität: 14.02.2007 DE 102007008167
(43) Veröffentlichungstag der Anmeldung: 20.08.2008
(73) Patentinhaber: Nordex Energy GmbH, 22848 Norderstedt (DE)
(72) Erfinder: Kirchner, Jens, 18258 Vorbeck (DE); Göpfert, Ulf, 18057 Rostock (DE); Koop, Karsten, 18057 Rostock (DE)
(74) Vertreter: Hauck Patentanwaltspartnerschaft mbB

(56) Entgegenhaltungen:
- EP-A2- 0 057 272
- EP-A2- 1 650 431
- WO-A1-86/04392
- DE-A1-122004 017 323
- DE-B3-102004 023 773
- DE-C1- 19 733 372
- DE-U1-020050 074 450
- GB-A- 2 022 534
- US-A- 4 260 332

## Beschreibung

Die vorliegende Erfindung bezieht sich auf eine Windenergieanlage mit einer Rotornabe, die mit mindestens einer Pitchdrehverbindung ausgestattet ist.

Bei der Pitchdrehverbindung, auch als Pitchlager bezeichnet, handelt es sich um ein Wälzlager, mit einem inneren und einem äußeren Ring, wobei einer der Ringe mit der Rotornabe verbunden ist und der andere Ring mit dem Rotorblatt verbunden ist. Über einen Pitchantrieb kann so das Rotorblatt um seine Längsachse gedreht und dessen Anstellwinkel zum Wind eingestellt werden.

Bekannte Rotornabenkonstruktionen bestehen aus einem Gußkörper mit einem Flansch zur Anbindung der Pitchdrehverbindung. Erich Hau beschreibt in Windkraftanlagen, Grundlagen, Technik, Einsatz, Wirtschaftlichkeit, dritte Auflage, Springer Verlag Berlin in Kapitel 7.5, daß die Qualität und das Gewicht der Rotorblätter neben der eigentlichen Rotorblattbauweise wesentlich durch die Konstruktion des Blattanschlusses zur Rotornabe bestimmt werden. Die konstruktive Gestaltung des Blattanschlußes an der Rotornabe gehöre zu den anspruchsvollsten Aufgaben der Rotorblattentwicklung. Zu den unterschiedlichen Ausgestaltungen des Rotorblattanschlusses zählt der doppelseitige Stahlflansch, bei dem die Blattwurzel zwischen einem inneren und einem äußeren Flansch eingeklemmt ist und die beiden Flansche miteinander verschraubt sind. Die Verbindung an die Rotornabe erfolgt dann über einen außen liegenden Flanschring. Ein weiterer Ansatz, der sich als besonders gewichtssparend erwiesen hat, sind einlaminierte Anschlußbolzen, die direkt in die Rotorblattwurzelstruktur einlaminiert sind. Ein weiterer Ansatz besteht darin, einlaminierte Leichtbauflansche oder Befestigungshülsen in der Rotorblattwurzel vorzusehen, um diese mit der Rotornabe zu verbinden.

Aus DE 10 2004 023 773 B3 ist bekannt, die Pitchdrehverbindung mit einem Innenring auszubilden, der fest mit der Rotornabe verbunden ist und mit einem Außenring, der fest mit dem Rotorblatt verbunden ist. Der Außenring besitzt eine Außenverzahnung, die zum Verstellen des Rotorblatts kämmend in Eingriff mit einem Antriebsritzel steht.

Aus DE 10 2004 017 323 A1 ist ein Blattanschluß für ein Rotorblatt bekannt, bei dem eine Arretiereinrichtung vorgesehen ist, die das Rotorblatt in einer vorgegebenen Winkelstellung spielfrei hält.

Aus WO 2004/090326 A1 ist eine Rotornabe bekannt, die eine einstückig ausgeformte, dreiarmige Versteifung im Bereich des Rotorblattanschlusses besitzt.

Die DE 197 33 372 betrifft ein Rotorblatt für eine Windenergieanlage mit mindestens einer im Bereich der Rotorblattwurzel angeordneten, sich in Längsrichtung quer zur Längsachse des Rotorblatts erstreckenden Ausnehmung zur Aufnahme eines Querbolzens, der zum Anschluss des Rotorblatts an eine Rotornabe mit einem Zugelement verbindbar ist. Die Blattwurzel ist zusammen mit einem Blattanschluss und einem Blattadapter um die Längsachse des Rotorblatts drehbar gelagert.

Der Erfindung liegt die Aufgabe zugrunde einen Blattanschluß für ein Rotorblatt an einer Rotornabe zu schaffen, der mit einfachen Mitteln eine zu große Belastung der Pitchdrehverbindung vermeidet.

Erfindungsgemäß wird die Aufgabe durch die Merkmale aus Anspruch 1 gelöst. Vorteilhafte Ausgestaltungen bilden die Gegenstände der Unteransprüche.

Die erfindungsgemäße Windenergieanlage besitzt eine Rotornabe, die mit mindestens einer Pitchdrehverbindung ausgestattet ist. Ferner ist mindestens ein Rotorblatt vorgesehen, das einen Flansch an der Blattwurzel zur Verbindung mit der Pitchdrehverbindung aufweist. Erfindungsgemäß ist ein Versteifungselement vorgesehen, das zwischen dem Flansch an der Blattwurzel und der Pitchdrehverbindung angeordnet ist. Das Versteifungselement erhöht insbesondere die radiale Steifigkeit im Bereich der Blattwurzel, die aufgrund der Materialwahl für das Rotorblatt in der Regel deutlich geringer ist als die radiale Steifigkeit der Nabe im Bereich der Pitchdrehverbindung. Das Versteifungselement ist dabei mit den Verbindungsmitteln zwischen der Pitchdrehverbindung und Rotorblattwurzel gehalten, die auch bei der direkten Befestigung des Rotorblatts an der Pitchdrehverbindung eingesetzt werden. Der Erfindung liegt die Erkenntnis zugrunde, daß eine unterschiedliche Steifigkeit sich nachteilig für die Pitchdrehverbindung auswirkt und zu einer ungünstigen Kraftübertragung in dieser führt. Hierdurch wird das Wälzlager der Pitchdrehverbindung unnötig stark beansprucht und seine Lebensdauer vermindert. Das erfindungsgemäß vorgesehene Versteifungselement verbessert die Kraftübertragung im Lager der Pitchdrehverbindung und damit die Lebensdauer sowie die Extrembelastbarkeit der Pitchdrehverbindung.

In einer bevorzugten Ausgestaltung ist das Versteifungselement als ein Ring oder als eine Platte ausgeführt. Auch als Wanne kann das Versteifungselement ausgebildet sein. Die Platte oder die Wanne kann einen geschlossenen Boden besitzen oder mit einer oder mehreren Durchbrechungen versehen sein.

In einer bevorzugten Weiterführung ist das erfindungsgemäße Versteifungselement aus Metall ausgeführt. Hierbei kann Stahl oder ein Gußmaterial eingesetzt werden. Als Gußmaterial wird bevorzugt Gußeisen mit Kugelgraphit beispielsweise entsprechend DIN EN 1563 (z.B. EN-GJS-400-18) eingesetzt.

In einer besonders bevorzugten Ausgestaltung besitzt das mit der Blattwurzel verbundene Versteifungselement eine Steifigkeit, die der Steifigkeit im Bereich der Verbindung von Pitchdrehverbindung und Rotornabe entspricht. Die Steifigkeit im Bereich der Verbindung zwischen Rotornabe und Pitchdrehverbindung ergibt sich sowohl aus dem nabenseitig vorgesehenen Material als auch aus der nabenseitigen Geometrie im Verbindungsbereich.

Das Versteifungselement kann auch als ein Trägerelement dienen und Komponenten eines Pitchsystems tragen.

In einer bevorzugten Ausgestaltung ist nabenseitig der Pitchdrehverbindung ein Trägerelement vorgesehen, das mit der Rotornabe und der Pitchdrehverbindung verbunden ist. Das Trägerelement erfüllt hierbei zwei Aufgaben: Einerseits kann es von seinem Material und seiner Geometrie so ausgebildet sein, daß die Steifigkeit im Bereich der nabenseitigen Verbindung in der Pitchdrehverbindung der Steifigkeit auf der rotorblattseitigen Verbindung entspricht. Andererseits kann das Trägerelement noch dazu eingesetzt werden, als Träger für den Pitchantrieb und/oder eine Pitchsteuerung zu dienen.

Die Erfindung wird nachfolgend anhand eines Beispiels näher erläutert. Es zeigt:
- Fig. 1: die Rotorblattwurzel mit einem Versteifungselement und der Pitchdrehverbindung, in einer auseinandergezogenen perspektivischen Ansicht,
- Fig. 2: die Pitchdrehverbindung, ein Trägerelement und die Rotomabe in einer auseinandergezogenen perspektivischen Ansicht und
- Fig. 3: das Versteifungselement, die Pitchdrehverbindung und das Trägerelement mit Pitchantrieb und Steuerung auf dem Trägerelement.

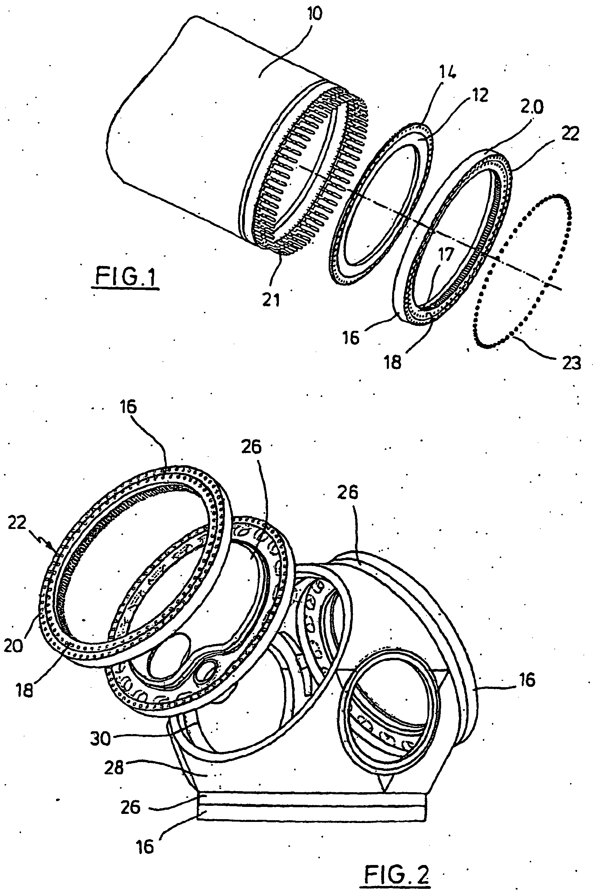

Figur 1 zeigt ein Rotorblatt 10 im Bereich der Blattwurzel. Nabenseitig von der Rotorblattwurzel ist ein Versteifungselement 12 dargestellt. Das Versteifungselement 12 ist ringförmig ausgebildet und besitzt entlang einem Kreis umlaufend angeordnete Bohrungen 14, durch die die Befestigungsbolzen für das Rotorblatt 10 geführt werden. Die Bohrungen erstrecken sich in axialer Richtung des Versteifungselements. Das Versteifungselement 12 besitzt eine gleichmäßige Dicke. Alternativ kann auch eine in radialer Richtung veränderliche Dicke des Versteifungselements vorgesehen sein. Der Innendurchmesser des Versteifungselements ist kleiner als der Innendurchmesser der Blattwurzel.

Das Rotorblatt 10 ist über eine ringförmige Pitchdrehverbindung 16 mit der Rotornabe verbunden. Die Pitchdrehverbindung 16 besteht aus einem Wälzlager, mit einem inneren Ring 18 und einem äußeren Ring 20. Beide Ringe sind mit Bohrungen versehen. In dem dargestellten Ausführungsbeispiel entsprechen die Bohrungen 14 in dem Versteifungselement 12 in Durchmesser, Anordnung und Abstand den Bohrungen des Innenrings 18 der Pitchdrehverbindung 16. Der Außendurchmesser des Versteifungselements 12 entspricht dem Außendurchmesser des Innenrings 18. Der Innenring 18 ist mit dem Versteifungselement 12 und dem Rotorblatt verschraubt. Der Außenring 20 ist mit seinen Bohrungen 22 zur Verbindung mit entsprechenden Befestigungsbohrungen an der Rotornabe ausgebildet.

Die Rotornabe ist in dem in Figur 2 dargestellten Auführungsbeispiel vierteilig ausgeführt. Die Rotornabe besitzt ein Trägerelement 26 und einen Rotornabenkörper 28. Der Außenring 20 ist mit dem Trägerelement 26 und dem Rotornabenkörper verschraubt. Wie beispielsweise an der perspektivischen Darstellung in Figur 2 zu erkennen, ist die Rotornabe für den Anschluß von drei Rotorblättern vorgesehen. Ferner wird die Rotornabe im Bereich 30 mit der Rotorwelle der Windenergieanlage verbunden, um das über die Rotorblätter aufgenommene Drehmoment auf die Rotorwelle zu übertragen.

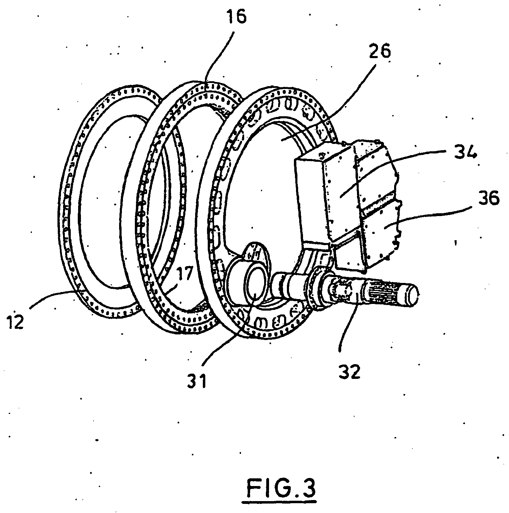

Figur 3 zeigt den Träger 26 aus der nabenseitigen Sicht. Der Träger 26 besitzt eine Durchgangsöffnung 31, durch die ein Pitchantrieb 32 aus der Rotornabe vorsteht. Der Pitchantrieb 32 besitzt ein Antriebsritzel, das in einem innenseitig vorgesehenen Verzahnung 17 der Pitchdrehverbindung 16 kämmt. Durch den Pitchantrieb wird die Relativlage zwischen Innenring und Außenring verstellt und das Rotorblatt um seine Längsachse gedreht. Ferner ist auf dem Trägerelement 26 ein Umrichterschrank 34 und ein Akkumulatorschrank 36 für das Pitchsystem vorgesehen. Insgesamt kann das gesamte Pitchsystem an dem Trägerelement 26 vormontiert sein. Auf diese Weise wird auch die Montage deutlich vereinfacht, da das Trägerelement mit dem Pitchsystem unabhängig von der Montage des Rotomabengehäuses getestet werden kann.

## Patentansprüche

1. Windenergieanlage mit einer Rotornabe, die mit mindestens einer Pitchdrehverbindung (16) verbunden ist, und mit mindestens einem Rotorblatt (10), dessen Blattwurzel über Verbindungsmittel mit der Pitchdrehverbindung verbindbar ist, wobei die Pitchdrehverbindung (16) als ein Wälzlager mit einem Innenring und einem Außenring ausgebildet ist, wobei
ein Versteifungselement (12) vorgesehen ist, das zwischen der Rotorblattwurzel und der Pitchdrehverbindung (16) angeordnet und über die Verbindungsmittel mit diesen verbunden ist, wobei die Verbindung aus Rotorblatt und Versteifungselement (12) eine Steifigkeit besitzt, die der Steifigkeit im Bereich der Verbindung von Pitchdrehverbindung und Rotornabe entspricht.

2. Windenergieanlage nach Anspruch 1, **dadurch gekennzeichnet, daß** das Versteifungselement (12) die Form eines Rings aufweist.

3. Windenergieanlage nach Anspruch 1, **dadurch gekennzeichnet, daß** das Versteifungselement (12) als Platte ausgebildet ist.

4. Windenergieanlage nach Anspruch 1, **dadurch gekennzeichnet, daß** das Versteifungselement (12) als Wanne ausgebildet ist.

5. Windenergieanlage nach Anspruch 3 oder 4, **dadurch gekennzeichnet, daß** das Versteifungselement (12) mit einer oder mehreren Durchbrechungen versehen ist.

6. Windenergieanlage nach einem der Ansprüche 1 bis 5, **dadurch gekennzeichnet, daß** das Versteifungselement (12) aus Metall hergestellt ist.

7. Windenergieanlage nach einem der Ansprüche 1 bis 6, **dadurch gekennzeichnet, daß** das Versteifungselement als Trägerelement für Komponenten eines Pitchsystems vorgesehen ist.

8. Windenergieanlage nach einem der Ansprüche 1 bis 7, **dadurch gekennzeichnet, daß** nabenseitig von der Pitchdrehverbindung ein Trägerelement vorgesehen ist, das mit der Rotornabe und der Pitchdrehverbindung verbunden ist.

9. Windenergieanlage nach Anspruch 8, **dadurch gekennzeichnet, daß** die Komponenten des Pitchsystems für das Rotorblatt auf dem rotornabenseitigen Trägerelement vorgesehen sind.

## Claims

1. Wind turbine with a rotor hub which is connected to at least one pitch bearing (16), and with at least one rotor blade (10), the blade root of which is connectable to the pitch bearing (16) via joining means, wherein the pitch bearing (16) is realized as a rolling bearing with an inner and an outer ring, wherein
a stiffening element (12) is provided, which is arranged between the rotor blade root and the pitch bearing (16) and connected to the same via the joining means, wherein the junction of the rotor blade (10) and the stiffening element (12) has a stiffness which corresponds to the stiffness in the region of the junction of the pitch bearing (16) and the rotor hub.

2. Wind turbine according to claim 1, **characterized in that** the stiffening element (12) has the shape of a ring.

3. Wind turbine according to claim 1, **characterized in that** the stiffening element (12) is realized as a plate.

4. Wind turbine according to claim 1, **characterized in that** the stiffening element (12) is realized as a vat.

5. Wind turbine according to claim 3 or 4, **characterized in that** the stiffening element (12) is provided with one or several openings.

6. Wind turbine according to any one of claims 1 to 5, **characterized in that** the stiffening element (12) is made from metal.

7. Wind turbine according to any one of claims 1 to 6, **characterized in that** the stiffening element (12) is provided as a carrier element for components of a pitch system.

8. Wind turbine according to any one of claims 1 to 7, **characterized in that** a carrier element is provided at the rotor hub side of the pitch bearing (16) which is connected to the rotor hub and to the pitch bearing (16).

9. Wind turbine according to claim 8, **characterized in that** the components of the pitch system for the rotor blade (10) are provided on the carrier element at the rotor hub side.

## Revendications

1. Eolienne comprenant un corps de moyeu qui est relié à au moins un raccord rotatif de tangage (16), et au moins une pâle de rotor (10) dont le pied de pâle peut être relié par des moyens de liaison au raccord rotatif de tangage (16), le raccord rotatif de tangage (16) se présentant sous la forme d'un roulement avec une bague interne et une bague externe,
un élément de renforcement (12) est prévu qui est disposé entre le pied de pâle de rotor et le raccord rotatif de tangage (16) et est relié à ceux-ci par le moyen de liaison, la liaison de la pâle de rotor (10) et de l'élément de renforcement (12) présente une rigidité qui correspond à la rigidité dans la zone de la liaison du raccord rotatif de tangage (16) et du corps de moyeu.

2. Eolienne selon la revendication 1, **caractérisée en ce que** l'élément de renforcement (12) a la forme d'une bague.

3. Eolienne selon la revendication 1, **caractérisée en ce que** l'élément de renforcement (12) a la forme d'une plaque.

4. Eolienne selon la revendication 1, **caractérisée en ce que** l'élément de renforcement (12) a la forme d'un bac.

5. Eolienne selon la revendication 3 ou 4, **caractérisée en ce que** l'élément de renforcement (12) est doté d'une ou de plusieurs perforations.

6. Eolienne selon une des revendications 1 à 5, **caractérisée en ce que** l'élément de renforcement (12) est en métal.

7. Eolienne selon une des revendications 1 à 6, **caractérisée en ce que** l'élément de renforcement est prévu comme élément de support pour des composants d'un système de tangage.

8. Eolienne selon une des revendications 1 à 7, **caractérisée en ce que** du côté du corps de moyeu du raccord rotatif de tangage est prévu un élément de support qui est relié au corps de moyeu et au raccord rotatif de tangage (16).

9. Eolienne selon la revendication 8, **caractérisée en ce que** les composants du système de tangage pour la pâle de rotor (10) sont prévus sur l'élément de support côté corps de moyeu.
